# EUROPEAN PATENT SPECIFICATION

(11) **EP 3 884 009 B1**
(45) Date of publication and mention of the grant of the patent: **28.05.2025**
(21) Application number: 18941078.0
(22) Date of filing: 22.11.2018
(51) Int. Cl.: C08G 18/40, C09J 175/06

(54) **ADHESIVE COMPOSITION**
KLEBSTOFFZUSAMMENSETZUNG
COMPOSITION ADHÉSIVE

(43) Date of publication of application: 29.09.2021
(73) Proprietor: Dow Global Technologies LLC, Midland, MI 48674 (US); Rohm and Haas Company, Collegeville, PA 19426 (US)
(72) Inventor: SHI, Rui, Shanghai 201203 (CN); ZHANG, Wenxin, Shanghai 201203 (CN); QU, Zhaohui, Shanghai 201203 (CN)
(74) Representative: Bandpay & Greuter
(86) International application number: PCT/CN2018/116899
(87) International publication number: WO 2020/103072

(56) References cited:
- WO-A1-2015/168670
- WO-A1-2015/168670
- WO-A1-2018/140116
- WO-A1-2018/140116
- CN-A- 105 254 868
- US-A1- 2014 370 368
- US-A1- 2015 380 695

## Description

### FIELD

The present invention relates to an adhesive composition; and more specifically, the present invention relates to a two-component polyurethane adhesive composition.

### BACKGROUND

Heretofore, various two-component (2K) type polyurethane adhesive compositions have been produced for use in various applications. As is known in the art, 2K polyurethane compositions are based on the reaction mixture of a polyol component and a polyisocyanate component; and have long been used as adhesives. When the two components are mixed, the polyisocyanates and polyols react to form a cured polyurethane adhesive; and the reaction can form a strong adhesive bond to many types of substrates.

For example, the following references disclose a 2K adhesive having good adhesion: U.S. Patent No. 8,716,427B2; CN104228210(A); CN107614648A; US20140242333 (A1); US20150380695 (A1); US20160204395 (A1); and WO 2015/168670.

US-A-5,134,205 relates to a polymer blend comprising a mixture of a hydroxyalkyl carbamate produced by reacting a cyclic carbonate with a diamine having the following structural formula: H2N-A-NH2, wherein A is a branched alkylene moiety having attached thereto at least one alkyl group and having from 4 to 10 carbon atoms, and a crosslinking agent selected from the group consisting of methylol polyamine and polyisocyanate compound.

US-A-4,820,830 relates to a hydroxylalkyl carbamate compound produced by reacting a cyclic carbonate with a diamine with the following structural formula: H2N-A-NH2, wherein A is a branched alkylene moiety having from 6 to 18 carbon atoms.

While there have been some advances in the art regarding 2K polyurethane compositions for use in a variety of applications, there is still room for developments in the art of adhesives, in particular lamination adhesives exhibiting enhanced properties of, for example, bond strength, moldability, and heat resistance such that the adhesive composition can appropriately be used for producing laminated composite film structures such as a foil-based composite structure lamination article.

For example, the package for packaging a lithium-ion battery (LIB) typically has a foil-based lamination structure and the foil-based lamination structure can be, for instance, a nylon, foil and retort cast polypropylene (RCPP) combination (nylon/foil/RCPP); and the foil-based lamination structure is usually manufactured by a deep draw molding method of nylon/foil/RCPP lamination film. Heretofore, the known lamination adhesive compositions used for such LIB applications cannot pass the deep draw and high temperature bond strength test (e.g., achieving a bonding strength of greater than (>) 2 Newtons per 15 millimeters [N/15 mm] at 120 °C between nylon and foil). Therefore, it is desired to provide a 2K solvent-based lamination adhesive composition which has good bond strength, moldability, and heat resistance; and can be used for manufacturing a foil-based structure lamination article such as a laminated film package for a LIB.

The present invention is directed to a polyurethane lamination adhesive composition, such as a 2K polyurethane adhesive, including (A) at least one isocyanate group-containing component including at least one isocyanate group-containing compound; and (B) at least one polyol component including:(Bi) at least one polyester polyol compound having a high molecular weight of > 8,000 grams per mole [g/mol]); and (Bii) at least one phosphate ester polyol compound, wherein the phosphate ester polyol component is present in the polyol component in an amount of from 0.3% to 2%. In the above embodiment, component (A), component (B) or both components (A) and (B) can optionally include at least one solvent compound.

In another embodiment, the present invention includes a process for making the above polyurethane lamination adhesive composition comprising admixing:
(A) at least one isocyanate group-containing component including at least one isocyanate group-containing compound; and
(B) at least one polyol component including:
   (Bi) at least one polyester polyol compound having a molecular weight (Mn) of greater than 8,000 grams per mole; and
   (Bii) at least one phosphate ester polyol compound, wherein the phosphate ester polyol compound is present in the polyol component in an amount of from 0.3 wt% to 2 wt%.

In another embodiment, the present invention includes a process for adhering at least a first substrate and at least a second substrate comprising:
(I) contacting at least a portion of one surface of the at least first substrate or at least a portion of one surface of the at least second substrate with the adhesive composition as defined above; and
(II) heating the combined first substrate, second substrate, and the adhesive of step (I) to a temperature sufficient to cure the adhesive composition.

In another embodiment, the present invention includes a multi-layer composite laminate film structure made by the process as defined above.

In another embodiment, the present invention includes a package for packaging a lithium-ion battery comprising a foil-based lamination structure wherein the foil-based lamination structure includes a combination of (a) a nylon layer, (b) a foil layer, (c) a polymer substrate layer; (d) a first upper adhesive layer comprising the composition as defined above disposed in between one side of the nylon layer and one side of the foil layer, and (e) a second lower adhesive layer different from the composition as defined above disposed in between the other side of the foil layer and one side of the polymer substrate layer.

The 2K solvent-based lamination adhesive composition of the present invention advantageously provides an increase in the properties, such as bond strength, heat resistance and moldability, for foil-based lamination structures (e.g., nylon/foil/RCPP) useful for manufacturing various articles. For example, while the 2K adhesive of the present invention can be used in a variety of applications; the present invention adhesive can be particularly useful in LIB applications.

In addition, the adhesive composition of the present invention can be designed for deep draw applications which require the use of a high number molecular weight (Mₙ) polyester polyol, for example, a polyester polyol having a Mₙ of > 8,000 g/mol.

Furthermore, it is generally known in the art that when the content of a phosphate ester in an adhesive composition is too high, a poor performance of the composition is observed in deep draw applications. However, the amount of phosphate ester used in the adhesive composition of the present invention is used in a proper predetermined amount such that poor performance of the composition is avoided.

There are other benefits/advantages of using the adhesive composition of the present invention including, for example: (1) there is no need to apply a metal compound in a final lamination adhesive; (2) there is no need to apply an acrylic polyol in a final adhesive composition; (3) there is no limitation on the content of an aliphatic carboxylic acid and/or an aromatic carboxylic acid used in the polyester polyol; (4) there is no need to use an epoxy-terminated polyester; and (5) there is no limitation on the content of an aliphatic isocyanate and/or an aromatic isocyanate used in the isocyanate-terminated compound.

### BRIEF DESCRIPTION OF THE DRAWINGS

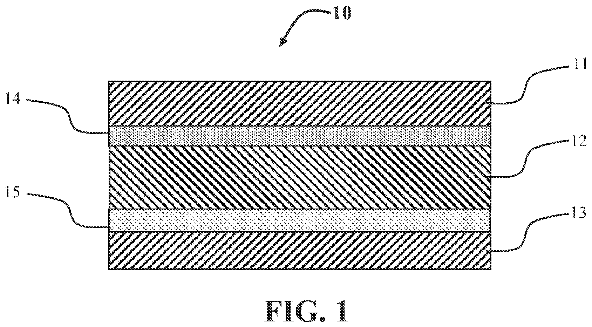

FIG. 1 is a schematic illustration showing a typical five-layered structure of a LIB packaging laminated film, generally indicated by numeral 10, which includes, from the outer side thereof, an outer layer side resin film layer (11), an outer layer side adhesive layer (14), a metal foil layer (12), an inner layer side adhesive layer (15), and an inner surface layer (13) composed of a heat seal layer or the like.

### DETAILED DESCRIPTION

In one general embodiment, the present invention includes a two-component (2K) adhesive composition; and more specifically, the present invention includes a 2K PU adhesive, including (A) at least one isocyanate group-containing component; and (B) at least one polyol component (or a hydroxyl group-containing component). As one illustration of the present invention, when component (A) is mixed with component (B), the ratio of (B):(A), viz, the OH/NCO dry weight index can be from 1 to 20 in one embodiment; from 2 to 15 in another embodiment; and from 5 to 12 in still another embodiment.

The isocyanate group-containing component, component (A), can be a mixture or blend of one or more compounds including, for example, at least one isocyanate group-containing compound such as one or more polyisocyanate compounds. The isocyanate group-containing component, component (A), can also include, as an optional component, at least one solvent compound such as ethyl acetate as described herein below.

The isocyanate group-containing compound useful in the adhesive formulation of the present invention can include, for example, aromatic isocyanates, aliphatic isocyanates, or mixtures thereof. Embodiments of an aromatic isocyanate useful in the present invention include, for example, isomers of methylene diphenyl diisocyanate ("MDI") such as 4, 4-MDI, 2, 4-MDI and 2,2'-MDI; modified MDI such as carbodiimide modified MDI or allophanate modified MDI; isomers of toluene-diisocyanate ("TDI") such as 2, 4-TDI and 2, 6-TDI; isomers of naphthalene-diisocyanate ("NDI") such as 1, 5-NDI; and combinations thereof.

Embodiments of an aliphatic isocyanate group-containing compound useful in the present invention include, for example, isomers of hexamethylene diisocyanate ("HDI"); isomers of isophorone diisocyanate ("IPDI"); isomers of xylene diisocyanate ("XDI"); isomers of hydrogenated methylene diphenyl diisocyanate ("H12MDI"); and combinations thereof.

In one preferred embodiment, the isocyanate group-containing compound useful in the present invention can be selected, for example, from the group consisting of an isocyanate monomer, a polyisocyanate, an isocyanate prepolymer, and mixtures of two or more thereof.

Exemplary of the isocyanate monomers useful in the adhesive formulation may include aromatic diisocyanates such as isomers of MDI, isomers of TDI; or aliphatic isocyanate such as HDI, IPDI and mixtures thereof.

Exemplary of the polyisocyanate compounds useful in the adhesive formulation can include, for example, a polyisocyanate adduct or trimer. For example, the polyisocyanate compound may include, but not limited to, a TDI- trimethylolpropane adduct (TDI-TMP adduct), and an IPDI-trimer. The polyisocyanate compound can have an average NCO functionality (f) of greater than or equal to (≥) 2.8 and less than or equal to (≤) 5 (i.e., 2.8 ≤ f ≤ 5).

Exemplary of the isocyanate prepolymer useful in the adhesive formulation can include, for example, at least one prepolymer- polyol - chain extender compound structure such as MDI (methylene diphenyl diisocyanate) end-capped prepolymers based on EO (ethylene oxide) and/or PO (propylene oxide) based diols or triols.

The amount of the isocyanate compound in the 2K adhesive formulation can be generally in the range of from 1 weight percent (wt %) to 30 wt % in one embodiment; from 2 wt % to 25 wt % in another embodiment; and from 4 wt % to 15 wt % in still another embodiment, based on the total dry weight of the components in the formulation. The solids content of the isocyanate group-containing component, component (A), can be, for example, from 30 wt % to 100 wt %.

The polyol component, component (B), can be a solution, mixture or blend of one or more compounds including, (Bi) at least one polyester polyol compound having a molecular weight of > 8,000 g/mol); and (Bii) at least one phosphate ester polyol compound.

The polyester polyol compound, component (Bi), useful in the adhesive formulation of the present invention can include, for example polyester polyols derived from polycarboxylic acids and polyols. The polyester polyol compound suitable for use in the polyol component (B), is a polyester polyols having a number average molecular weight of at least 8,000 g/mol. In addition, the suitable polyester polyols can have an OH functionality (f) of ≥ 1.8 to ≤ 3 (i.e., 1.8 ≤ f ≤ 3) and an OH number of less than (<) 15 mg KOH/g. The "OH number", as used herein, is characterized by the milligrams of potassium hydroxide equivalent to the hydroxyl content in one gram of polyol.

In another embodiment, the polyester polyol compound suitable for use in the adhesive formulation can include, for example, polycondensates of diols and also, optionally, polyols (e.g., triols, tetraols), and mixtures thereof; and of dicarboxylic acids, and mixtures thereof. In another embodiment, the polyester polyol compound can also be derived from dicarboxylic acids, their corresponding anhydrides, or corresponding esters of lower alcohols.

Suitable diols useful in the present invention can include, but are not limited to, ethylene glycol; butylene glycol; diethylene glycol; 1, 2-propanediol; 1, 3-propanediol; 1, 3-butanediol; 1, 4-butanediol; 1, 6-hexanediol; 2-methyl -1,3-propanediol; neopentyl glycol; and mixtures thereof. In one embodiment, to achieve a polyester polyol having an OH functionality of > 2, polyols having an OH functionality of 3 or > 3 can optionally be included in the adhesive composition (e.g., trimethylolpropane, glycerol, erythritol, or pentaerythritol).

Suitable dicarboxylic acids useful in the present invention can include, but are not limited to, aliphatic acids, aromatic acids, and combinations thereof. Examples of suitable aromatic acids include phthalic acid, isophthalic acid, terephthalic acid, and mixtures thereof. Examples of suitable aliphatic acids include cyclohexane dicarboxylic acid, adipic acid, azelaic acid, sebacic acid, glutaric acid, maleic acid, fumaric acid, itaconic acid, malonic acid, suberic acid, 2-methyl succinic acid, 3,3-diethyl glutaric acid, 2,2-dimethyl succinic acid, trimellitic acid, and mixtures thereof. Anhydrides of such acids may also be used. Further, monocarboxylic acids, such as benzoic acid and hexane carboxylic acid, should be minimized or excluded from the compositions of the present invention. In one preferred embodiment, saturated aliphatic or saturated aromatic acids, such as azelaic acid, sebacic acid, adipic acid, terephthalic acid, isophthalic acid, and mixtures thereof can be used in the present invention.

The polyester polyol compound, component (Bi), can have a glass transition temperature (Tg) in the range of -25 °C to 40 °C. All the individual ranges and subranges between -25 °C and 40 °C are included in the scope of the present invention; for example, the polyester polyol compound can have a Tg in the range of -15 °C to 5 °C in one embodiment and a Tg in the range of -20 °C to 10 °C in another embodiment.

The amount of the polyester polyol compound, component (Bi), in the two-component adhesive formulation can be generally in the range of from 70 wt % to 95 wt % in one embodiment; from 75 wt % to 90 wt % in another embodiment; and from 80 wt % to 90 wt % in still another embodiment, based on the total dry weight of the components in the formulation.

The molecular weight (Mₙ) of the polyester polyol compound is from > 8,000 g/mol in one embodiment, > 10,000 g/mol in another embodiment, > 12,000 g/mol in still another embodiment, and > 20,000 g/mol in yet another embodiment. Also, the Mₙ of the polyester polyol compound can be from > 8,000 g/mol to 200,000 g/mol in one embodiment, from 10,000 g/mol to 150,000 g/mol in another embodiment; and from 20,000 g/mol to 100,000 g/mol in still another embodiment.

Alternatively, the polyester polyol compound can be selected based on the hydroxyl value of the polyester polyol compound which can be < 15 mg KOH/g in one embodiment, < 10 mg KOH/g in another embodiment; and < 5 mg KOH/g in still another embodiment.

In one general embodiment, the phosphate ester polyol compound, component (Bii), can include for example, the compounds of Structure (I) or Structure (II) as follows: 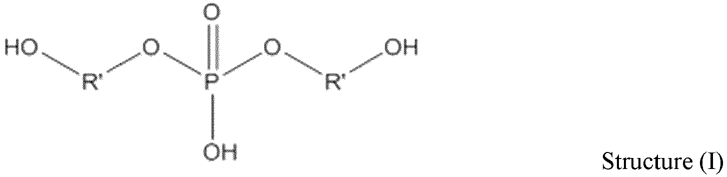 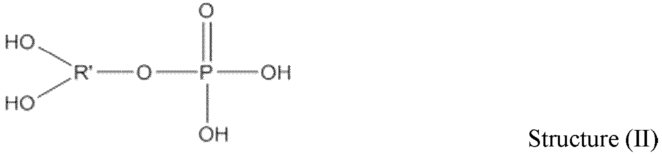 where in Structure (I) and Structure (II) above, R' can be selected from any organic group. In addition to the pendant groups shown in Structures (I) and (II), R' may or may not have one or more additional pendant -OH groups, and R' may or may not have one or more additional pendant -P(=O)(OH)₂. In another embodiment, the phosphate ester polyol can be obtained by reacting phosphoric-type acids with polyols. For example, suitable phosphoric-type acids include, but are not limited to, orthophosphoric acid, any member of the series of compounds that may be made by condensation of orthophosphoric acid by the elimination of water such as pyrophosphoric acid, tripolyphosphoric acid and polyphosphoric acids, and mixture thereof. For example, suitable polyols include, but are not limited to, diols, triols, polyether polyol, polyester polyol, and mixture thereof.

In another embodiment, the phosphate ester polyol compound useful in the adhesive formulation can include, for example, the reaction product of polyphosphoric acid and a polyol wherein the polyol is selected from polyether polyol, polyester polyol, and combinations of two or more polyols. In one preferred embodiment, the phosphate ester polyol compound useful in the present invention can be selected, for example, from the reaction product of polyester polyol and 115 percent (%) polyphosphoric acid.

The polyol component, component (B), may further contains solvent; and in a preferred embodiment, each of the polyol ingredients is soluble in the solvent used in component (B). For example, each of the polyol ingredients can be soluble in the amount, by weight based on the weight of the solvent, of 10 wt % or more in one embodiment, 50 wt % or more in another embodiment, and 100 wt % or more in still another embodiment. In one preferred embodiment, the solvent can be selected from hydrocarbon solvents, polar aprotic solvents, polar protic solvents, and mixtures thereof. In another preferred embodiment, the solvent can be a polar aprotic solvent. In still another preferred embodiment, the solvent can be selected from ethyl acetate, acetone, methyl ethyl ketone, and mixtures thereof. When a solvent is used in component (B), the amount of solvent, by weight based on the total weight of component B, can be 10 wt % or more in one embodiment, 20 wt % or more in another embodiment, and 40 wt % or more in still another embodiment. When a solvent is used in component (B), the amount of solvent, by weight based on the total weight of component B, can be 90 % or less in one embodiment, and 80 % or less in another embodiment.

Although the present invention is directed to a two-component system, the adhesive formulation of the present invention may be formulated with a wide variety of optional additives to enable performance of specific functions while maintaining the excellent benefits/properties of the present adhesive product. The optional components, component (C), of the polyurethane adhesive may be added to the first isocyanate group-containing component (A); or the optional components of the polyurethane adhesive may be added to the second polyol component (B). For example, in one embodiment, an optional solvent compound can be added to component (A) of the adhesive formulation of the present invention; and in another embodiment, an optional solvent compound can be added to component (B) of the adhesive formulation of the present invention. In still another embodiment, the same or different optional solvent compound can be added to both component (A) and component (B) of the adhesive formulation.

The optional solvent compound, when used, can include, for example, ethyl acetate, butanone, acetone, methylbenzene and other urethane grade of organic solvents that can dissolve: component (A), polyester, epoxy, silane, phosphate ester, and any mixtures thereof. In another embodiment, the same solvent as described above may be added to the composition after the components (A) and (B) have been mixed together.

In other embodiments, the optional compounds or additives useful in the formulation may include, for example, other solvents; adhesion promoters such as silane, epoxy and phenolic resins; chain extenders such as glycerin, trimethylol propane, diethylene glycol, propanediol, and 2-methyl-1, 3-propanediol; and catalysts such as a latent tin catalyst such as dioctyltinmercaptide; a non-tin based metal-organic catalyst such as bismuth(III)-neodecanaote; or a thermosensitive amine catalyst such as DBU (1,8-Diazabicyclo-[5.4.0] undec-7-ene); fillers such as silicon dioxide; and mixtures thereof.

The amount of an optional additive, component (C), when used in the 2K adhesive formulation, can be generally in the range of from 0 wt % to 20 wt % in one embodiment; from 0.01 wt % to 10 wt % in another embodiment; and from 1 wt % to 5 wt % in still another embodiment, based on the total weight of the components in the formulation.

In one broad embodiment, the process for making the adhesive formulation of the present invention includes mixing, admixing or blending: (A) at least one isocyanate group-containing component including at least one isocyanate group-containing compound; and any of the above optional compounds desired such as a solvent compound; and (B) at least one polyol component including: (Bi) at least one polyester polyol compound; (Bii) at least one phosphate ester polyol compound; and any of the above optional compounds desired such as a solvent compound. One or more additional optional components may be added to the adhesive formulation as desired. For example, the components (A) and (B) can be mixed together in the desired concentrations discussed above and at a temperature of from 20 °C to 25°C in one embodiment; and from 15 °C to 35 °C in another embodiment. The order of mixing of the components is not critical and two or more components can be mixed together followed by addition of the remaining components. The adhesive formulation components may be mixed together by any known mixing process and equipment.

In general, the two components (A) and (B) can be prepared separately from one another; and the components can each be stored in a separate container. The other components and optional additives of the polyurethane adhesive formulation may be present as part of the first component (A) or the second component (B). A suitable container for the storage of each component can be, for example, a drum, a hobbock, a bag, a bucket, a can, a cartridge or a tube. Prior to the application of the adhesive composition, the two components (A) and (B) are stored separately and mixed with one another only during or prior to the application.

The adhesive formulation of the present invention produced by the process of the present invention has several advantageous properties and benefits compared to conventional adhesive formulations. For example, some of the properties exhibited by the adhesive formulation can include increased bond strength, moldability, and heat resistance; properties that are beneficial in a process for manufacturing a foil-based structure lamination article such as a laminated film for producing a package for a LIB.

For example, the bond strength at 120 °C between nylon layer and aluminum foil layer exhibited by the adhesive formulation can be generally 1 N/15 mm or greater since the higher the bond strength, the better is the bonding performance of the adhesive formulation. For example, the bond strength of the adhesive can be ≥ 1 N/15 mm in one embodiment, ≥ 1.5 N/15 mm in another embodiment, and ≥ 2.5 N/15 mm in another embodiment, Other preferred embodiments of the adhesive bond strength can include the range of from 1 N/15 mm to 8 N/15 mm in one embodiment, from 2.5 N/15 mm to 8 N/15 mm in another embodiment; from 1.5 N/15 mm to 5.5 N/15 mm in still another embodiment; and from 1 N/15 mm to 5 N/15 mm in yet another embodiment. The bond strength of the adhesive can be measured by the general procedure described in the Test Methods of the Examples herein below.

In another embodiment, moldability is a beneficial property exhibited by the adhesive of the present invention. The moldability of the adhesive can be measured by the depth of the deep draw setting of such a deep draw process. And, the moldability of the adhesive can be generally 1 millimeter (mm) or greater since the higher the depth of deep draw, the better is the moldability performance of the adhesive formulation. For example, the moldability of the adhesive can be ≥ 1 mm in one embodiment, ≥ 3 mm in another embodiment, and ≥ 4 mm in another embodiment. Other preferred embodiments of the adhesive moldability can include the range of the depth of deep draw setting of from 1 mm to 15 mm, from 3 mm to 8 mm in another embodiment, and from 4 mm to 6 mm in still another embodiment. The moldability of the adhesive can be measured by the general procedure described in the Test Methods of the Examples herein below.

In still another embodiment, the heat resistance of the adhesive formulation of the present invention is another beneficial property of the formulation. The heat resistance of an adhesive can be determined by laminated structure made by the adhesive passing or failing an aging test selected from a conventional aging test known in the art. Typically, a laminated structure is subjected to an aging test that is carried out for a particular number of hours; and then the laminated structure made by the adhesive can be visually observed to pass or fail the test by any sign of delamination, tunneling or any type of structure failure. Generally, the aging test can be carried out, for example, for a desired period of time as can be measured by the procedure described in the Test Methods of the Examples herein below. In general, the adhesive composition should pass an aging time of > 60 hours (hr) at 85 °C and 85 % humidity.

Generally, the bonding of two substrates using the adhesive of the present invention can be carried out in an industrial scale for production of large quantities of lamination products. Advantageously, the two components (A) and (B) are filled and stored separately in drums or hobbocks until the components are ready to be used. As aforementioned, prior to the application of the adhesive composition, the two components are stored separately; and only during or prior to the application of the adhesive are the two components mixed with one another. During application, the components are forced out of the storage containers by means of feed pumps, and metered in via lines of a mixing apparatus, such as those commonly used for 2K adhesives in industrial production.

The mixing of the two components (A) and (B) can be done via static mixers or by means of dynamic mixers. When mixing components (A) and (B), care should be taken to ensure that the two components are homogeneously mixed insofar as possible. If the two components are poorly mixed, there will be local deviations from the advantageous mixing ratio, which may have implications with respect to a deterioration of the mechanical properties of the resulting product made using the adhesive.

The application of the adhesive to the surface of at least one substrate can be carried out by conventional means such as by using a roll coater, a doctor blade, or extrusion equipment and process. The adhesive composition can be applied at a level, in grams of dry composition per square meter, of 1 or greater in one embodiment and 2 or greater in another embodiment. The adhesive composition can be applied at a level, in grams of dry composition per square meter, of 10 or less in one embodiment and 7 or less in another embodiment.

Another embodiment of the present invention is directed to a process for bonding at least a first substrate to at least a second substrate including the steps of: (a) mixing the two components (A) and (B) as described above to form the polyurethane adhesive, (b) applying the polyurethane adhesive of step (a) to at least one of the substrate surfaces to be bonded and evaporating the solvent if any, (c) contacting (or joining) together the first and second substrates to be bonded with the polyurethane adhesive, and (d) curing the polyurethane adhesive. For example, the adhesive can be heated to fully cure the adhesive; and the heating of the adhesive can be carried out at a temperature of from 25 °C to 80 °C in one general embodiment.

In the above process, upon contact of the first component (A) having isocyanate groups (the NCO-component) with the second component (B) having hydroxyl groups (the OH-component) to form the polyurethane adhesive, curing begins by chemical reaction. In general, the hydroxyl groups present in component (B) react with the isocyanate groups present in component (A). As a result of the above reaction, the polyurethane adhesive cures to form a solid material, and in turn, bonding the two substrates together. This curing process is also referred to as crosslinking.

The two substrates may consist of the same or different materials. Suitable substrates that can be used in the above process can include, for example, woven and nonwoven fabric, metal foil, polymers, and metal-coated polymers. Films optionally have a surface on which an image is printed with ink; and the ink may be in contact with the adhesive composition. In some embodiments, the films are polymer films and metal foil. In a preferred embodiment, a combination of nylon film and aluminum foil can be used as the two substrates to be bonded together.

The 2K polyurethane adhesive of the present invention can be used, for example, in the following applications: LIB applications for manufacturing the packaging for the LIB; and various other packaging applications such as food packaging applications like cans or containers, pouches, packaging trays and the like.

In one preferred embodiment, a LIB packaging film material can be manufactured according to the present invention. For example, with reference to FIG. 1, there is shown a laminated film structure generally indicated by numeral 10 including three substrate film layers 11, 12, and 13 bonded together by a first outer layer side adhesive 14 and a second inner layer side adhesive 15. In a first step, an outer layer side resin film layer 11 and a metal foil layer 12 may be laminated on each other by using the outer layer side polyurethane adhesive 14 according to the present invention to form a first intermediate laminate. Next, in a second step, an inner surface layer 13 may be laminated on the metal foil layer 12 surface of the intermediate laminate by using an inner layer side adhesive 15.

Alternatively, in a first step, the metal foil layer 12 and the inner surface layer 13 may be laminated on each other by using an inner layer side adhesive 15 to form a first intermediate laminate. Next, in a second step, the metal foil layer 12 of the intermediate laminate and an outer layer side resin film layer 11 may be laminated on each other by using a polyurethane adhesive 14 according to the present invention.

### EXAMPLES

The following examples are presented to further illustrate the present invention in detail but are not to be construed as limiting the scope of the claims. Unless otherwise stated all parts and percentages are by weight.

Various raw materials used in the Inventive Examples (Inv. Ex.) and the Comparative Examples (Comp. Ex.) are described in Table I as follows:

**Table I - Raw Materials**

| Raw Material | Description | Supplier |
|---|---|---|
| Catalyst F | Toluene diisocyanate, oligomeric reaction products with 2,2'-oxydiethanol and propylidenetrimethanol, 75 % solid content, ethyl acetate as solvent | The Dow Chemical Company (Dow) |
| Adcote 102A | Polyester solution in MEK, 36 % solid content, Mₙ > 8,000 | Dow |
| PE112 | Phosphate ester, 100 % solid content | - |
| Resin PE 45 M | Polyester solution in MEK, 45 % solid content, Mₙ > 8,000 | Dow |
| Silquest^{™} A-187 | Silane | Momentive Performance Materials Inc. |
| Ethyl Acetate | Solvent | Sinopharm Chemical Reagent Co., Ltd (SCRC) |
| DER 671 | Epoxy | Dow |
| Bester 648 | Polyester polyol, OH=136 | Dow |
| PPA 115 | 115 % polyphosphoric acid | SCRC |
| Adcote 502S | A high-performance solvent-based adhesive OH component, 51 % solid content | Dow |
| Adcote 811A | A high-performance solvent-based adhesive OH component, 60 % solid content | Dow |
| Adcote 545S | A medium-performance solvent-based adhesive OH component, 66.7 % solid content | Dow |

With reference to FIG. 1 again, there is shown a schematic illustration of a five-layered structure of a LIB packaging laminated film, generally indicated by numeral 10. The layers of structure 10 includes a nylon substrate layer 11 (25 microns [µ] in thickness); the first adhesive layer 14 referred to herein as "Adhesive A"; an aluminum substrate layer 12 (40 µ in thickness); the second adhesive layer 15 referred to herein as "Adhesive B"; and a retort cast polypropylene (RCPP) substrate layer 13 (20 µ in thickness). The substrates shown in FIG. 1 are also described in Table II.

**Table II - Substrates**

| Substrate | FIG. 1 No. | Description | Supplier |
|---|---|---|---|
| Nylon film (NY) | 11 | Thickness: 25 mm | Xiamen Changsu |
| Aluminum foil | 12 | Thickness: 40 mm; the surface of the foil is treated by trivalent chromium passivation | Henan Pentai |
| Retort cast polypropylene (RCPP) | 13 | Thickness: 20 mm | Okamoto |

| | | | |
|---|---|---|---|
| Notes for Table II: The aluminum foil layer and the RCPP layer were laminated first with "Adhesive B" - referred as prelaminated A1/RCPP, before laboratory evaluation. All the Inventive Examples (Inv. Ex.) and the Comparative Examples (Comp. Ex.) were applied between the nylon and aluminum foil surfaces as the outer lamination layer "adhesive A". | | | |

### General Procedure for Synthesizing a Phosphate Ester Polyol

The phosphate ester polyol used in the Inventive Examples and the Comparative Examples is synthesized according to the formulation listed in Table III. The raw material compounds, PA115 and Bester 648, are charged into a 1,000 milliliter (mL) glass reactor and mixed carefully to form a formulation. After all the above raw materials are fed, the heating of the formulation is started. When the formulation reaches around 60 °C, increase the rotation speed to 50 revolutions per minute (RPM); and control the temperature increasing speed, and monitor the reaction during the whole process. During the temperature increase process, PA115 separates from Bester 648; and PA115 concentrates at the bottom of the formulation. Meanwhile, the color of PA115 also becomes dark. When the reaction temperature reaches up to around 100-103 °C, the reaction product becomes transparent and homogeneous. The reaction product is kept at around 100-103 °C for 2 hr. When the hydroxyl value of the formulation reaches theoretical value, the reactor is cooled as soon as possible. The reactor is cooled down to 60 °C -70 °C. Then, the final product is charged into a well-sealed steel bottle with a nitrogen atmosphere to protect the formulation from contamination.

**Table III - Phosphate Ester Polyol PE112 Formulation**

| Formulation | Bester 648 | PA 115 |
|---|---|---|
| Phosphate ester polyol | 40 | 3 |

The NCO component and the OH component used in the examples are synthesized according to the formulations described in Table IV. The NCO component used in the examples is Catalyst F. The OH component used in the examples is a solution of high molecular weight polyester polyol, silane and phosphate ester which are all dissolved in an organic solvent as described in Table IV. Before the raw materials are charged into a reactor, the moisture content of all raw materials is set to < 500 parts per million (ppm). During the stirring of the raw materials in the synthesis process, a nitrogen atmosphere is used to avoid moisture contamination.

**Table IV - Two-Component Solvent-Based Adhesive Formulations**

| Designation of Sample Formulation | PE112 (Wt %) | Adcote 102A (Wt %) | Resin PE 45 M (Wt %) | A187 (Wt %) | DER 671 (Wt %) | Ethyl Acetate (Wt %) | Catalyst F (Wt %) | Adcote 5458 (Wt %) |
|---|---|---|---|---|---|---|---|---|
| NCO-1 | | | | | | | 100 | |
| OH-1 | | 83.33 | | | | 16.67 | | |
| OH-2 | | 79.72 | | 0.1 | 1.2 | 18.98 | | |
| OH-3 | 0.3 | 78.89 | | 0.1 | 1.2 | 19.33 | | |
| OH-4 | 0.5 | 78.33 | | 0.1 | 1.2 | 19.87 | | |
| OH-5 | 1 | 76.94 | | 0.1 | 1.2 | 20.76 | | |
| OH-6 | 2 | 74.17 | | 0.1 | 1.2 | 22.53 | | |
| OH-7 | 2.5 | 72.78 | | 0.1 | 1.2 | 23.42 | | |
| OH-8 | 1.5 | 79.17 | | | | 19.33 | | |
| OH-9 | 0.3 | | 63.11 | 0.1 | 1.2 | 35.29 | | |
| OH-10 | 2 | | 61.56 | 0.1 | 1.2 | 36.14 | | |
| OH-11 | 2.5 | | 58.22 | 0.1 | 1.2 | 37.98 | | |
| OH-12 | 1 | | | 0.1 | 1.2 | 56.17 | | 41.53 |
| OH-13 | 0.3 | | | 0.1 | 1.2 | 55.82 | | 42.58 |
| OH-14 | 2 | | | 0.1 | 1.2 | 56.67 | | 40.03 |
| OH-15 | 1.5 | | | | | 55.77 | | 42.73 |

### Examples 1-7 and Comparative Examples A-J

To prepare the Inventive Examples and Comparative Examples, the isocyanate components and polyol components are mixed according to the pairings (as sample designation) and mix ratio illustrated in Table V to form the adhesive compositions of the Examples. The adhesive compositions of the Examples are then used to form laminates comprising nylon film and pre-laminated aluminum (Al) foil (i.e., an Al foil/RCPP laminate).

**Table V - Samples and Mix Ratios**

| Example | Sample Designation | Mix Ratio |
|---|---|---|
| Comp. Ex. A | OH-1/NCO-1 | 100/5.5 |
| Comp. Ex. B | OH-2/NCO-1 | 100/5.5 |
| Inv. Ex. 1 | OH-3/NCO-1 | 100/5.5 |
| Inv. Ex. 2 | OH-4/NCO-1 | 100/5.5 |
| Inv. Ex. 3 | OH-5/NCO-1 | 100/5.5 |
| Inv. Ex. 4 | OH-6/NCO-1 | 100/5.5 |
| Comp. Ex. C | OH-7/NCO-1 | 100/5.5 |
| Inv. Ex. 5 | OH-8/NCO-1 | 100/5.5 |
| Inv. Ex. 6 | OH-9/NCO-1 | 100/5.5 |
| Inv. Ex. 7 | OH-10/NCO-1 | 100/5.5 |
| Comp. Ex. D | OH-11/NCO-1 | 100/5.5 |
| Comp. Ex. E | Adcote 502S/NCO-1 | 100/6.5 |
| Comp. Ex. F | Adcote 811A/NCO-1 | 100/10 |
| Comp. Ex. G | OH-12/NCO-1 | 100/5.5 |
| Comp. Ex. H | OH-13/NCO-1 | 100/5.5 |
| Comp. Ex. I | OH-14/NCO-1 | 100/5.5 |
| Comp. Ex. J | OH-15/NCO-1 | 100/5.5 |

### General Procedure for the Coating and Laminating Process

The coating and lamination process used in the examples is conducted in a Labo-Combi 400 lamination machine available from Nordmeccanica group. The adhesive is applied on nylon film and then the nylon film/adhesive is laminated to the aluminum foil surface of a pre-laminated Al foil/RCPP. The temperature of the nip roll of the lamination machine is kept at 70 °C, and the coating speed is 100 meters per minute (m/min) during the lamination process. The dry coating weight is controlled at 4-4.5 grams per square meter (g/m²). Then, the resulting laminated film is cured (e.g., at a temperature of 60 °C) in an oven before testing.

### TEST METHODS

### T-Peel (90°) Bonding Strength (Hand Assisted T-Peel) at 120 °C Between Nylon and Foil Layers

After curing, laminated films are cut into 15 mm width test strip samples for T-peel testing in an Instron 5965 U 5974 machine with a crosshead speed of 250 millimeters per minute (mm/min). Three test strips are then tested in a warm oven at 120 °C and an average value of the three strips tested is recorded. During the testing, the tail of the strip is pulled slightly by finger to ensure the tail of the strip remains at 90° degrees toward the peeling direction. The results of the bonding strength test are measured in units of N/15 mm. To pass this bonding strength test, the bond strength of the laminated films should be > 2 N/15 mm.

### Aging Resistant Test

Laminates (laminated films) are cut into 4 cm x 4 cm size square test samples; and then the samples are subjected to an aging resistant test. The samples are aged in a constant temperature humidity chamber, LHU-213, under 85 °C and 85 % relative air humidity for 60 hr. During the aging resistant test, six pieces of one laminated film are chosen for evaluation. Every piece of the laminate is fully contacted with ambient air. After the aging resistant test, the appearance of the final laminated film is evaluated. To pass the aging resistant test, no bubbles in the film should be observed; and no delamination of the laminated film should be detected.

### Deep Draw Test (DDT)

Cured laminated films are cut into 8 cm x 12 cm size rectangle test samples; and then the samples are positioned at the platform of an auto deep draw equipment, SDCK-004A, for evaluation. The equipment is operated with a specific parameter for deep draw application which would adjust the air pressure to 0.5 megapascals (MPa) and would maintain a punch speed of molds at 100 mm/min. The depth of deep draw molding is set at 5 mm for all laminates tested. Upon deep draw molding, the nylon side of the laminates' surface as the out layer forms a convex surface. Different adhesives are used in the laminates. The appearance of the laminates after the deep draw molding is visually checked for any bubbles, tunnels, and/or delaminations. Also, the laminates are checked for any sign of broken substrates. Meanwhile, the laminates after punch are also heated to 100 °C in a warm oven for 1 hour, and then the appearance of the laminates are checked again visually for defects as described above.

Generally, a laminate packaging film for a LIB, that has a failure in terms of a broken foil of the laminate after the deep draw test does not pass the quality test to be adequate for consumer use; and a laminate packaging film for a LIB, that has a failure in terms of delamination of a nylon/foil laminated composite film of the laminate after the deep draw test, also does not pass the quality test to be adequate for consumer use.

**Table VI - Performance Results**

| Example | Bond Strength of Nylon/Foil at 120°C (N/15MM) | Aging Resistant Test | Appearance After DDT |
|---|---|---|---|
| Comp. Ex. A | 1.76 | Small bubble | Foil broken |
| Comp. Ex. B | 2.16 | Pass | Foil broken |
| Inv. Ex. 1 | 2.76 | Pass | Pass |
| Inv. Ex. 2 | 2.92 | Pass | Pass |
| Inv. Ex. 3 | 3.55 | Pass | Pass |
| Inv. Ex. 4 | 3.78 | Pass | Pass |
| Comp. Ex. C | 3.45 | Pass | Foil broken; nylon/foil delamination detected |
| Inv. Ex. 5 | 2.32 | Pass | Pass |
| Inv. Ex. 6 | 2.87 | Pass | Pass |
| Inv. Ex. 7 | 3.12 | Pass | Pass |
| Comp. Ex. D | 2.78 | Pass | Foil broken |
| Comp. Ex. E | 2.1 | Pass | Foil broken; nylon/foil delamination detected |
| Comp. Ex. F | 1.09 | Pass | Foil broken; nylon/foil delamination detected |
| Comp. Ex. G | 0.89 | Pass | Foil broken; nylon/foil delamination detected |
| Comp. Ex. H | 1.14 | Bubble | Foil broken; nylon/foil delamination detected |
| Comp. Ex. I | 1.09 | Pass | Foil broken; nylon/foil delamination detected |
| Comp. Ex. J | 1.06 | Bubble | Foil broken; nylon/foil delamination detected |

From the performance results summarized in Table VI, it indicates that using a certain amount of phosphate ester polyol (e.g., from 0.3 % to 2 %) can significantly improve the bond strength of a nylon/foil laminate at a temperature of 120 °C; and can significantly improve the performance of deep draw of the nylon/foil/RCPP laminate which includes the appearance of the laminate after: (a) the deep draw test of the laminate, and (b) the 100 °C aging test of the laminate made by the two-component adhesive.

## Claims

1. A polyurethane adhesive composition comprising:
(A) at least one isocyanate group-containing component including at least one isocyanate group-containing compound; and
(B) at least one polyol component including:
(Bi) at least one polyester polyol compound having a molecular weight (Mn) of greater than 8,000 grams per mole; and
(Bii) at least one phosphate ester polyol compound, wherein the phosphate ester polyol compound is present in the polyol component in an amount of from 0.3 wt% to 2 wt%.

2. The composition of claim 1, wherein the concentration ratio by dry weight of component (B) to component (A) [B:A] is from 1 to 20.

3. The composition of claim 1, wherein the polyurethane adhesive composition: (i) has a bond strength of from 1 N/15 mm to 8 N/15 mm, (ii) passes an aging time of greater than 60 hours at 85 °C and 85 % humidity, and/or (iii) has sufficient moldability to provide a depth of deep draw setting of from 1 millimeter to 15 millimeters.

4. The composition of claim 1, wherein component the at least one phosphate ester polyol compound, component (Bii), is a compound having the following Structure (I) or Structure (II): 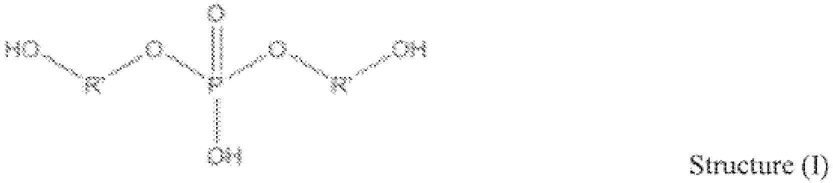 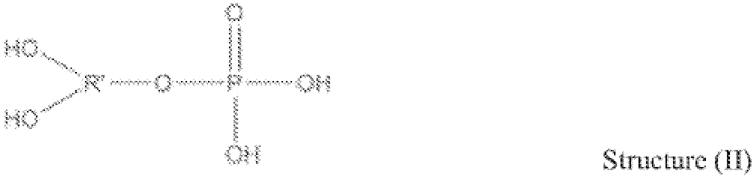 where in Structure (I) and in Structure (II) above, R' can be selected from an organic group.

5. The composition of claim 1, wherein the at least one phosphate ester polyol compound, component (Bii), is a reaction product of (a) polyether polyol, polyester polyol, or mixture thereof; and
(b) a polyphosphoric acid; or a mixture of a polyphosphoric acid and other acids.

6. A process for making a polyurethane adhesive composition comprising admixing:
(A) at least one isocyanate group-containing component including at least one isocyanate group-containing compound; and
(B) at least one polyol component including:
(Bi) at least one polyester polyol compound having a molecular weight (Mn) of greater than 8,000 grams per mole; and
(Bii) at least one phosphate ester polyol compound, wherein the phosphate ester polyol compound is present in the polyol component in an amount of from 0.3 wt% to 2 wt%.

7. A process for adhering at least a first substrate and at least a second substrate comprising:
(I) contacting at least a portion of one surface of the at least first substrate or at least a portion of one surface of the at least second substrate with the adhesive composition of claim 1; and
(II) heating the combined first substrate, second substrate, and the adhesive of step (I) to a temperature sufficient to cure the adhesive composition.

8. The process of claim 7, wherein the heating step (II) is carried out at a temperature of from
25 °C to 80 °C.

9. A multi-layer composite laminate film structure made by the process of claim 8.

10. A package for packaging a lithium-ion battery comprising a foil-based lamination structure wherein the foil-based lamination structure includes a combination of (a) a nylon layer, (b) a foil layer, (c) a polymer substrate layer; (d) a first upper adhesive layer comprising the composition of claim 1 disposed in between one side of the nylon layer and one side of the foil layer, and (e) a second lower adhesive layer different from the composition of claim 1 disposed in between the other side of the foil layer and one side of the polymer substrate layer.

## Patentansprüche

1. Klebstoffzusammensetzung aus Polyurethan, umfassend:
(A) mindestens eine Isocyanatgruppen-enthaltende Komponente, darin eingeschlossen mindestens eine Isocyanatgruppen-enthaltende Verbindung,
(B) mindestens eine Polyolkomponente, darin eingeschlossen:
(Bi) mindestens eine Polyesterpolyolverbindung mit einem Molekulargewicht (Mn) von mehr als 8000 Gramm pro Mol; und
(Bii) mindestens eine Phosphatesterpolyolverbindung, wobei die Phosphatesterpolyolverbindung in der Polyolkomponente in einer Menge von 0,3 Gew% bis 2 Gew%. vorhanden ist.

2. Zusammensetzung nach Anspruch 1, wobei das Konzentrationsverhältnis von Trockengewicht (B) zur Komponente (A) [B:A] von 1 zu 20 ist.

3. Zusammensetzung nach Anspruch 1, wobei die Klebstoffzusammensetzung aus Polyurethan (i) eine Bindungsstärke von 1 N/15 mm bis 8 N/15 mm aufweist, (ii) eine Alterungszeit von mehr als 60 Stunden bei 85 °C und 85 % Feuchtigkeit durchläuft und/oder (iii) ausreichend Formbarkeit aufweist, um eine Tiefe der Tiefzieheinstellung von 1 Millimeter bis 15 Millimeter bereitzustellen.

4. Zusammensetzung nach Anspruch 1, wobei die mindestens einen Phosphatesterpolyolverbindung, Komponente (Bii), eine Komponente mit der folgenden Struktur (I) oder Struktur (II) ist: 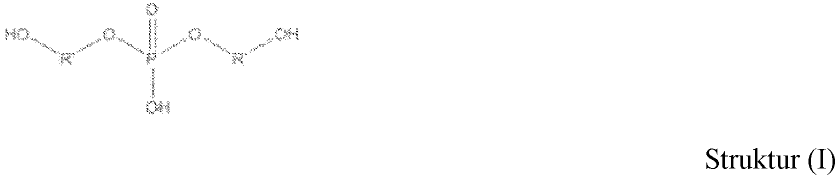 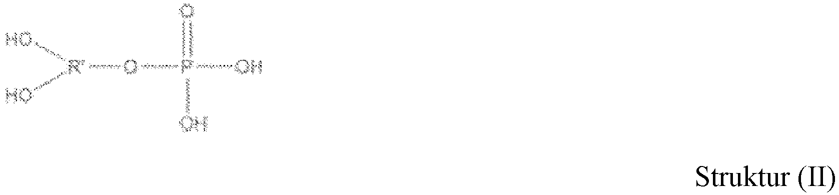 wobei in Struktur (I) und in Struktur (II) oben R' aus einer organischen Gruppe ausgewählt werden kann.

5. Zusammensetzung nach Anspruch 1, wobei die mindestens eine Phosphatesterpolyolverbindung, Komponente (Bii), ein Reaktionsprodukt von (a) Polyetherpolyol, Polyesterpolyol oder einer Mischung daraus ist; und
(b) eine Polyphosphorsäure; oder eine Mischung aus eine Polyphosphorsäure und anderen Säuren.

6. Verfahren zur Herstellung einer Klebstoffzusammensetzung aus Polyurethan, umfassend das Beimischen von:
(A) mindestens einer Isocyanatgruppen-enthaltenden Komponente, darin eingeschlossen mindestens eine Isocyanatgruppen-enthaltende Verbindung, und
(B) mindestens eine Polyolkomponente, darin eingeschlossen:
(Bi) mindestens eine Polyesterpolyolverbindung mit einem Molekulargewicht (Mn) von mehr als 8000 Gramm pro Mol; und
(Bii) mindestens eine Phosphatesterpolyolverbindung, wobei die Phosphatesterpolyolverbindung in der Polyolkomponente in einer Menge von 0,3 Gew% bis 2 Gew%. vorhanden ist.

7. Verfahren zum Haften mindestens eines ersten Substrats und mindestens eines zweiten Substrats, umfassend:
(I) In-Kontakt-Bringen mindestens eines Abschnitts einer Fläche des mindestens ersten Substrats oder mindestens eines Abschnitts einer Fläche des mindestens zweiten Substrats mit der Klebstoffzusammensetzung nach Anspruch 1; und
(II) Erwärmen des kombinierten ersten Substrats, zweiten Substrats und des Klebstoffs von Schritt (I) auf eine ausreichende Temperatur, um die Klebstoffzusammensetzung auszuhärten.

8. Verfahren nach Anspruch 7, wobei der Erwärmungsschritt (II) bei einer Temperatur von 25 °C bis 80 °C durchgeführt wird.

9. Mehrschichtige Verbundstofflaminat-Filmstruktur, hergestellt durch das Verfahren nach Anspruch 8.

10. Verpackung zum Verpacken einer Lithium-Ionen-Batterie, umfassend eine folienbasierte Laminierungsstruktur, wobei die folienbasierte Laminierungsstruktur eine Kombination aus (a) einer Nylonschicht, (b) einer Folienschicht, (c) einer Polymersubstratschicht; (d) eine erste obere Klebstoffschicht, umfassend die Zusammensetzung nach Anspruch 1, die zwischen einer Seite der Nylonschicht und einer Seite der Folienschicht angeordnet ist, und (e) eine zweite untere Klebstoffschicht, die verschieden von der Zusammensetzung nach Anspruch 1 ist, die zwischen der anderen Seite der Folienschicht und einer Seite der Polymersubstratschicht angeordnet ist, beinhaltet.

## Revendications

1. Composition d'adhésif de polyuréthane comprenant :
(A) au moins un composant contenant un groupe isocyanate incluant au moins un composé contenant un groupe isocyanate ; et
(B) au moins un composant polyol incluant :
(Bi) au moins un composé polyester polyol ayant une masse moléculaire (Mn) supérieure à 8 000 grammes par mole ; et
(Bii) au moins un composé ester phosphate polyol, lequel composé ester phosphate polyol est présent dans le composant polyol en une quantité de 0,3 % en poids à 2 % en poids.

2. Composition selon la revendication 1, dans laquelle le rapport de concentration en poids sec du composant (B) au composant (A) [B/A] est de 1 à 20.

3. Composition selon la revendication 1, dans laquelle la composition d'adhésif de polyuréthane : (i) a une force de collage de 1 N/15 mm à 8 N/15 mm, (ii) passe un temps de vieillissement supérieur à 60 heures à 85°C et sous 85 % d'humidité, et/ou (iii) a une aptitude au moulage suffisante pour assurer un réglage de profondeur de moule profond de 1 millimètre à 15 millimètres.

4. Composition selon la revendication 1, dans laquelle l'au moins un composé ester phosphate polyol, le composant (Bii), est un composé ayant la structure (I) ou la structure (II) suivantes : 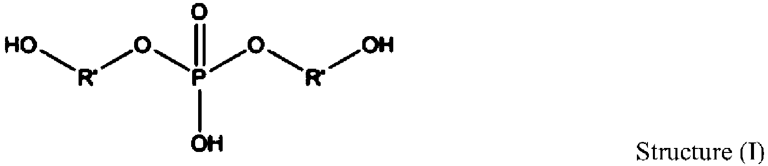 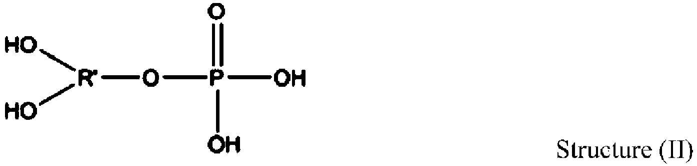 où, dans la structure (I) et la structure (II) ci-dessus, R' peut être choisi parmi les groupes organiques.

5. Composition selon la revendication 1, dans laquelle l'au moins un composé ester phosphate polyol, le composant (Bii), est un produit de la réaction de
(a) un polyéther polyol, un polyester polyol, ou un mélange de ceux-ci ; et de
(b) un acide polyphosphorique ; ou un mélange d'acide polyphosphorique et d'autres acides.

6. Procédé pour préparer une composition d'adhésif de polyuréthane, comprenant le mélange de :
(A) au moins un composant contenant un groupe isocyanate incluant au moins un composé contenant un groupe isocyanate ; et
(B) au moins un composant polyol incluant :
(Bi) au moins un composé polyester polyol ayant une masse moléculaire (Mn) supérieure à 8 000 grammes par mole ; et
(Bii) au moins un composé ester phosphate polyol, lequel composé ester phosphate polyol est présent dans le composant polyol en une quantité de 0,3 % en poids à 2 % en poids.

7. Procédé pour faire adhérer au moins un premier substrat et au moins un deuxième substrat, comprenant :
(I) la mise en contact d'au moins une portion d'une surface de l'au moins premier substrat ou d'au moins une portion d'une surface de l'au moins un deuxième substrat avec la composition d'adhésif selon la revendication 1 ; et
(II) le chauffage du premier substrat, du deuxième substrat et de l'adhésif combinés de l'étape (I) à une température suffisante pour durcir la composition d'adhésif.

8. Procédé selon la revendication 7, dans lequel l'étape de chauffage (II) est effectuée à une température de 25°C à 80°C.

9. Structure de film stratifié composite multicouche produite par le procédé de la revendication 8.

10. Emballage pour emballer une batterie au lithium-ion comprenant une structure de stratification à base de feuille, dans lequel la structure de stratification à base de feuille inclut une combinaison de (a) une couche de nylon, (b) une couche de feuille, (c) une couche de substrat polymère ; (d) une première couche d'adhésif supérieure comprenant la composition selon la revendication 1 disposée entre un côté de la couche de nylon et un côté de la couche de feuille, et (e) une deuxième couche d'adhésif inférieure différente de la composition selon la revendication 1 disposée entre l'autre côté de la couche de feuille et un côté de la couche de substrat polymère.
